# EUROPÄISCHE PATENTSCHRIFT

(11) **EP 3 546 667 B1**
(45) Veröffentlichungstag und Bekanntmachung des Hinweises auf die Patenterteilung: **01.09.2021**
(21) Anmeldenummer: 19163784.2
(22) Anmeldetag: 19.03.2019
(51) Int. Cl.: E04B 9/00

(54) **HALTERUNG ZUM LÖSBAREN BEFESTIGEN EINES MODULS ZUM KÜHLEN UND/ODER HEIZEN AN EINER DECKENUNTERKONSTRUKTION FÜR EINE HEIZ- UND/ODER KÜHLDECKENANORDNUNG**
SUPPORT FOR REMOVABLY FIXING A MODULE FOR COOLING AND/OR HEATING TO A CEILING SUBSTRUCTURE FOR A HEATING AND/OR COOLING CEILING ASSEMBLY
SUPPORT DE FIXATION AMOVIBLE D'UN MODULE DE REFROIDISSEMENT ET / OU DE CHAUFFAGE À UNE SOUS-STRUCTURE DE PLAFOND POUR UN DISPOSITIF DE CHAUFFAGE ET / OU DE REFROIDISSEMENT

(30) Priorität: 27.03.2018 DE 102018107246
(43) Veröffentlichungstag der Anmeldung: 02.10.2019
(73) Patentinhaber: PYD-Thermosysteme GmbH, 83483 Bischofswiesen (DE)
(72) Erfinder: Ilsanker, Stefan, 83471 Schönau am Königssee (DE); Rieger, Manfred, 83471 Berchtesgaden (DE); Landa, Andreas, 83317 Teisendorf (DE)
(74) Vertreter: Naessens, Stephan

(56) Entgegenhaltungen:
- EP-A2- 2 894 411
- DE-U1-202007 010 215
- FR-A1- 3 038 365

## Beschreibung

Die vorliegende Erfindung betrifft eine Halterung zum lösbaren Befestigen eines Moduls zum Kühlen und/oder Heizen an einer Deckenunterkonstruktion für eine Heiz- und/oder Kühldeckenanordnung gemäß der im Oberbegriff des Patentanspruchs 1 näher definierten Art. Ferner betrifft die Erfindung ein Modul zum Heizen und/oder Kühlen sowie eine Heiz- und/oder Kühldeckenanordnung mit der Halterung und dem Modul.

Allgemein bekannte Heiz- und/oder Kühldeckenanordnungen werden auch als Klimadecken bezeichnet. Die Klimadecke wird üblicherweise an einer Trockenbauunterkonstruktion befestigt. Die Trockenbauunterkonstruktion umfasst Trockenbau-Profile, die ein Grobrost und ein Feinrost bilden. Die Trockenbau-Profile des Grobrostes sind üblicherweise an der Raumdecke befestigt, während U-förmige Profile des Feinrostes quer zu den Trockenbau-Profilen des Grobrostes verlaufen und an den Trockenbau-Profilen des Grobrostes befestigt sind. Zum Heizen und/oder Kühlen sind plattenförmige Heiz- und/oder Kühl-Module vorgesehen, die eine Medium führende Rohrleitung aufnehmen. Die Module werden zwischen den Profilen des Feinrostes angeordnet. Zum Befestigen der Module wird eine Verkleidung auf die Module und auf die Profile des Feinrostes angeordnet und über Verschraubungen an den Profilen des Feinrostes befestigt. Dadurch, dass die Module zwischen den Profilen des Feinrostes angeordnet sind, wird die aktiv zu beheizende bzw. zu kühlende Fläche um die Abmessungen der Profile des Feinrostes verringert. Somit wird die aktive Fläche und somit die Heiz- und/oder Kühlleistung in nachteiliger Weise reduziert. Darüber hinaus ergibt sich das Problem, dass die Montage bei derartigen Klimadecken aufwendig ist, da über die Verkleidung die Module befestigt werden. Zudem kann kein endlos verlegbares Rohr verwendet werden, sondern an jedem Modul ist ein Rohranschluss erforderlich, welches in nachteiliger Weise den Installationsaufwand erhöht.

Aus der Druckschrift FR 3 038 365 A1 ist eine Halterung zum Befestigen eines Moduls zum Kühlen und Heizen an einer Deckenunterkonstruktion bekannt. Die Halterung umfasst einen Modulhalter mit einem ersten Befestigungsbereich zum lösbaren werkzeuglosen Befestigen an dem Modul und einen zweiten Befestigungsbereich zum lösbaren werkzeuglosen Befestigen an einem Profil der Deckenunterkonstruktion.

Der vorliegenden Erfindung liegt die Aufgabe zugrunde, eine Halterung zum lösbaren Befestigen der Module an der Deckenunterkonstruktion und ein Modul sowie eine Heiz- und/oder Kühldeckenanordnung vorzuschlagen, welche einen minimalen Installationsaufwand bei verbesserter Leistungsfähigkeit realisieren.

Diese Aufgabe wird erfindungsgemäß durch die Merkmale des Patentanspruches 1 bzw. 7 bzw. 12 gelöst, wobei sich vorteilhafte und beanspruchte Weiterbildungen aus den Unteransprüchen und der Beschreibung sowie den Zeichnungen ergeben.

Demzufolge wird eine Halterung zum Befestigen eines Moduls zum Kühlen und/oder Heizen an einer Deckenunterkonstruktion vorgeschlagen. Um eine konstruktiv einfache werkzeuglose und lösbare Befestigung eines Moduls an einer Deckenunterkonstruktion zu realisieren, ist vorgesehen, dass zumindest ein Modulhalter mit zumindest einem ersten Befestigungsbereich zum werkzeuglosen lösbaren Befestigen an dem Modul und mit zumindest einem zweiten Befestigungsbereich zum werkzeuglosen lösbaren Befestigen an einem Profil der Deckenunterkonstruktion vorgesehen sind.

Mit der erfindungsgemäßen Halterung ist es möglich, die Module mit mehreren Modulhaltern quasi vollflächig von unten bzw. raumseitig gesehen auf den Profilen der Deckenunterkonstruktion lösbar zu befestigen, ohne dass dafür eine Verschraubung erforderlich ist. Dadurch, dass die Kühl- und/oder Heiz-Module auf den Profilen angeordnet sind und somit vollflächig ohne die sonst notwendigen Abstände verlegt werden können, wird eine maximale Heiz- bzw. Kühlleistung realisiert, da die Module über die gesamte zur Verfügung stehende Deckenfläche an der Deckenunterkonstruktion angeordnet werden können, wodurch die zur Verfügung stehende zu beheizende bzw. zu kühlende Fläche optimal ausgenutzt wird. Des Weiteren wird durch die lösbare und gleichzeitig werkzeuglose Befestigung der Module an der Deckenunterkonstruktion über die vorgeschlagenen Modulhalter eine vereinfachte und zeitsparende Montage realisiert, da die Module quasi an der Deckenunterkonstruktion vormontiert werden, um anschließend eine Sichtbeplankung aufbringen zu können, welche zum Beispiel aus Gipskartonplatten besteht. Dadurch, dass die Sichtbeplankung auf die Module aufgebracht wird und die Sichtbeplankung durch die Module hindurch an den Profilen des Feinrostes der Deckenunterkonstruktion befestigt wird, erfolgt eine vorteilhafte Anpressung der Sichtbeplankung an z. B. Wärmeleitblechen der Module, sodass der Wärmeübergang zwischen den Modulen und der Sichtbeplankung deutlich erhöht wird, wodurch insgesamt eine höhere Heiz- und/oder Kühlleistung erreicht wird.

Im Rahmen einer Weiterbildung der Erfindung ist vorgesehen, dass der Modulhalter mit den verschiedenen Befestigungsbereichen als einteiliges elastisches Bauteil ausgeführt ist. Vorzugsweise kann der Modulhalter mittels Spritzguss aus Kunststoff hergestellt werden. Zum einen werden hierdurch die Herstellungskosten minimiert und zum anderen werden gleichzeitig die elastischen Eigenschaften des Modulhalters realisiert.

Über den ersten Befestigungsbereich wird der Modulhalter an einer korrespondierenden Verriegelungsausnehmung an dem Modul befestigt, wobei der an dem Modul befestigte Modulhalter über den zweiten Befestigungsbereich an der Deckenunterkonstruktion insbesondere an den Profilen des Feinrostes der Deckenunterkonstruktion lösbar ohne Werkzeug besonders einfach befestigt wird.

Die konstruktive Gestaltung des ersten Befestigungsbereiches bei dem vorgeschlagenen Modulhalter wird derart ausgeführt, dass eine lösbare und gleichzeitig werkzeuglose Befestigung des Modulhalters an dem Modul ermöglicht wird. Die besonders vorteilhafte Ausführung, bei der zudem eine korrekte bzw. vertauschungssichere Befestigung sichergestellt wird, zeichnet sich dadurch aus, dass der erste Befestigungsbereich einen Anlageabschnitt aufweist, der in Einbaulage an einer dem Modul zugewandten Seite einen vorstehenden in einer korrespondierenden Verriegelungsausnehmung des Moduls vertauschungssicher befestigbaren Fuß oder dergleichen aufweist. Somit wird einerseits eine ausreichende Abstützung an der Modulwand über den Anlageabschnitt realisiert und andererseits eine verriegelbare Befestigung des Modulhalters an dem Modul über den Fuß ermöglicht. Der Anlageabschnitt kann bevorzugt tellerförmig, plattenförmig oder dergleichen ausgeführt sein. Beispielsweise kann an einer dem Fuß abgewandten Seite des Anlageabschnittes ein vorstehender Verbindungsbereich vorgesehen sein, an den sich der zweite Befestigungsbereich zum Befestigen an dem Profil der Deckenunterkonstruktion anschließt.

Im Rahmen der Erfindung ist vorgesehen, dass der Fuß im Querschnitt eine T-Form oder ähnliches aufweist, wobei der quer verlaufende Abschnitt des Fußes unterschiedlich gestaltete Enden aufweist und wobei der senkrechte Abschnitt mittig einerseits an dem quer verlaufenden Abschnitt und andererseits an dem Anlageabschnitt angeformt ist. Die unterschiedlich gestalteten Enden des quer verlaufenden Abschnittes stellen eine korrekte Montage des Modulhalters in der Verriegelungsausnehmung des Modules sicher, da der Fuß nur in korrekter Ausrichtung in die Verriegelungsausnehmung aufgrund der unterschiedlichen Enden einführbar ist. Ferner wird durch den senkrechten Abschnitt eine Zentrierfunktion beim Einführen des Fußes und bei der Drehung zum Verriegeln sichergestellt.

Die konstruktive Gestaltung des zweiten Befestigungsbereiches bei dem vorgeschlagenen Modulhalter wird derart ausgeführt, dass eine lösbare gleichzeitig werkzeuglose Befestigung des Modulhalters an einem Profil der Deckenunterkonstruktion ermöglicht wird. Eine besonders vorteilhafte Ausführung zeichnet sich beispielsweise dadurch aus, dass der zweite Befestigungsbereich eine Streifenform oder dergleichen mit zum Beispiel drei Abschnitten bildet, wobei sich ein erster Streifenabschnitt in einem ersten Winkel an den Verbindungsbereich anschließt und in Einbaulage an einer dem Profil zugewandten Seite eine Anschlagnase oder dergleichen aufweist, wobei sich ein zweiter Streifenabschnitt in einem zweiten Winkel an den ersten Streifenabschnitt anschließt und wobei sich ein dritter Streifenabschnitt in einem dritten Winkel an den zweiten Streifenabschnitt anschließt und in Einbaulage an dem dem Profil zugewandten Ende eine Haltenase oder dergleichen aufweist. Aufgrund der gewählten Streifenform ergibt sich eine ausreichend stabile Ausführung des elastischen Modulhalters, um eine ausreichende Vorspannung bei der Montage des Modulhalters an dem Modul und an dem Profil der Deckenunterkonstruktion zu gewährleisten.

Ein weiterer Aspekt der Erfindung bezieht sich auf ein plattenförmiges Modul zum Aufnehmen eines endlos verlegten Rohres zum Heizen und/oder Kühlen, wobei zumindest eine Verriegelungsausnehmung oder dergleichen zum lösbaren und werkzeuglosen Aufnehmen eines Modulhalters der Halterung vorgesehen ist, wobei sich die vorbeschriebenen Vorteile und weitere Vorteile ergeben.

Ein nächster Aspekt der Erfindung bezieht sich auf eine Heiz- und/oder Kühldeckenanordnung mit einer Deckenunterkonstruktion mit etwa U-förmigen Trockenbauprofilen und mit mehreren an den Trockenbauprofilen über mehrere vorgeschlagene Modulhalter als Halterung lösbar und werkzeuglos befestigbare Module, wobei sich die vorbeschriebenen Vorteile und weitere Vorteile ergeben.

Nachfolgend wird die vorliegende Erfindung anhand der Zeichnungen weiter erläutert. Es zeigen:
Figur 1 eine Seitenansicht einer erfindungsgemäßen Halterung mit einem Modulhalter zum lösbaren und werkzeuglosen Befestigen eines Moduls an einer Deckenunterkonstruktion;
Figur 2 eine dreidimensionale Ansicht des Modulhalters;
Figur 3 eine Unteransicht des Modulhalters;
Figur 4 eine dreidimensionale Ansicht von mehreren Modulen;
Figur 5 eine Teilansicht des Moduls im Bereich einer Verriegelungsausnehmung zum Aufnehmen des Modulhalters;
Figur 6 eine weitere Teilansicht des Moduls im Bereich der Verriegelungsausnehmung mit Führungsabschnitten zum Verriegeln des Modulhalters;
Figur 7 eine nächste Teilansicht des Moduls im Bereich der Verriegelungsausnehmung mit einem verriegelten Modulhalter und;
Figur 8 eine geschnittene Teilansicht eines einerseits mit einem Profil der Deckenunterkonstruktion und andererseits mit einem Modul lösbar und werkzeuglos befestigten Modulhalters.

In den Figuren ist eine erfindungsgemäße Halterung mit einem Modulhalter 1 zum lösbaren und werkzeuglosen Befestigen eines Moduls 2 zum Kühlen und/oder Heizen an einer Deckenunterkonstruktion, insbesondere einer Trockenbauunterkonstruktion mit Profilen eines Grobrostes und mit U-förmigen Profilen 3 eines Feinrostes, beispielhaft dargestellt.

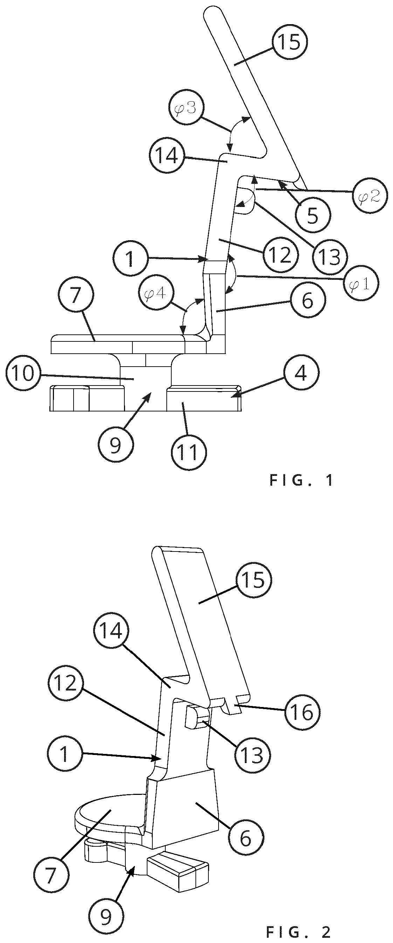

Figur 1 zeigt eine Einzelteilansicht des Modulhalters 1 mit einem ersten Befestigungsbereich 4 zum Befestigen an dem Modul 2 und einem zweiten Befestigungsbereich 5 zum Befestigen an dem Profil 3 des Feinrostes der Trockenbauunterkonstruktion. Die beiden Befestigungsbereiche 4, 5 sind über einen Verbindungsbereich 6 miteinander verbunden. Der Modulhalter bildet mit dem ersten Befestigungsbereich 4, dem zweiten Befestigungsbereich 5 und dem Verbindungsbereich 6 ein einteiliges elastisches Bauteil.

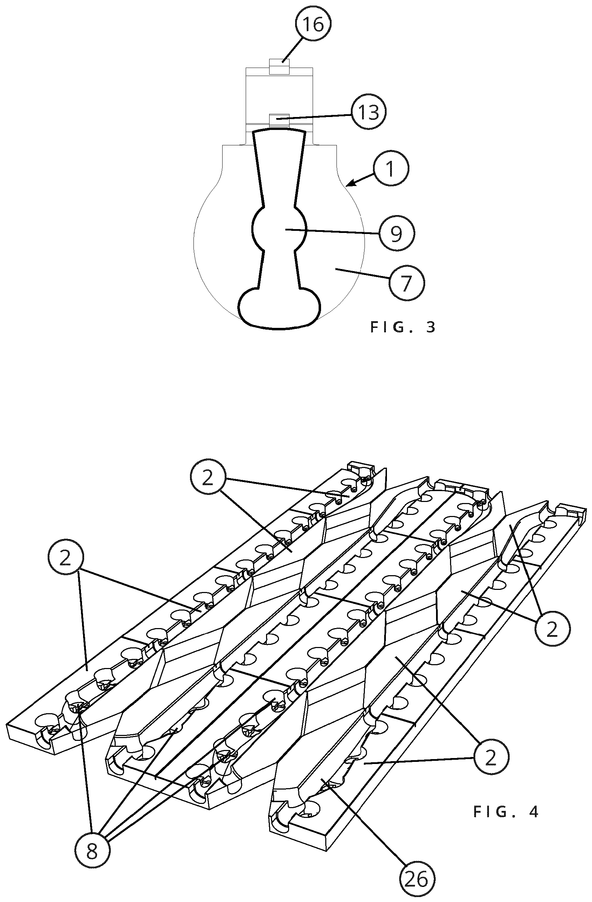

Wie beispielsweise aus Figur 2 und 3 deutlich wird, weist der erste Befestigungsbereich 4 z. B. einen etwa tellerförmigen oder plattenförmigen Anlageabschnitt 7 zum Abstützen an der Wand des Modules 2 auf. Der Anlageabschnitt 7 weist in Einbaulage an einer dem Modul 2 zugewandten Seite einen vorstehenden in einer korrespondierenden Verriegelungsausnehmung 8 des Moduls 2 korrekt und vertauschungssieher befestigten Fuß 9 auf. Der Anlageabschnitt 7 weist an einer dem Fuß 9 abgewandten Seite den vorstehenden Verbindungsabschnitt 6 auf, an den sich der zweite Befestigungsbereich 5 anschließt.

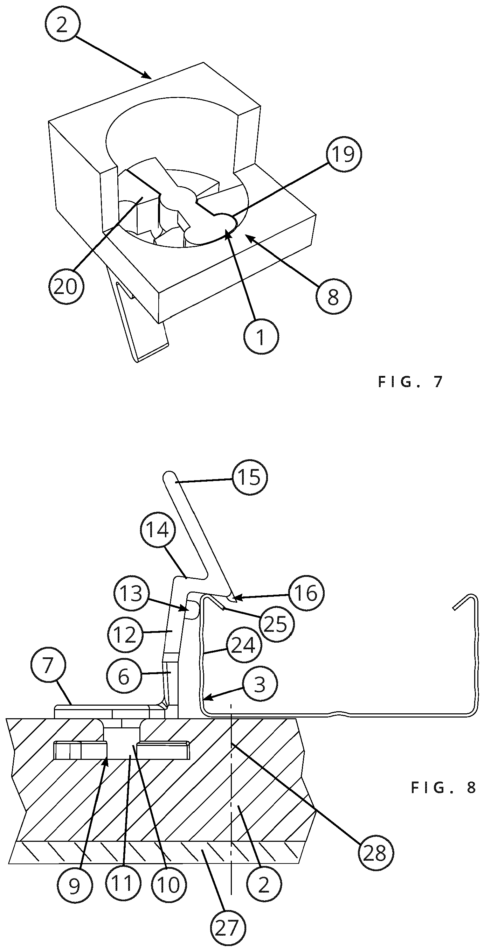

Der Fuß 9 des Modulhalters 1 bildet im Querschnitt eine T-Form, die in Einbaulage auf dem Kopf steht, wie dies aus Figur 8 ersichtlich ist. Die T-Form wird durch einen senkrecht verlaufenden Abschnitt 10 und einen quer verlaufenden Abschnitt 11 gebildet. Der quer verlaufende Abschnitt 11 weist unterschiedlich gestaltete Enden auf. Bei der dargestellten Ausführungsvariante sind die Enden im Querschnitt einem Schlüsselloch nachempfunden, sodass ein Ende abgerundet und das andere Ende eckig ausgeführt ist. Auf diese Weise wird eine vertauschungssichere Montage bzw. Installation realisiert. Der senkrechte Abschnitt 10 der T-Form des Fußes 9 ist mittig einerseits an dem quer verlaufenden Abschnitt 11 und andererseits an dem Anlageabschnitt 7 angeformt.

Demzufolge kann der Fuß 9 mit dem quer verlaufenden Abschnitt 11 in die deckungsgleich ausgeführte Verriegelungsausnehmung 8 des Moduls 2 vertauschungssicher eingeführt werden, bis der Anlageabschnitt 7 mit der Außenwand des Moduls 2 in Anlage kommt. Der eingeführte Fuß 9 wird durch Drehung in der Verriegelungsausnehmung 8 des Moduls 2 verriegelt.

Der zweite Befestigungsbereich 5 bildet eine Streifenform mit mehreren Abschnitten. Ein erster Streifenabschnitt 12 schließt sich in einem ersten Winkel ϕ1 an den Verbindungsbereich 6 an, wobei der erste Streifenabschnitt 12 in Einbaulage an einer dem Profil 3 zugewandten Seite eine Anschlagnase 13 aufweist. Ein zweiter Streifenabschnitt 14 schließt sich in einem zweiten Winkel ϕ2 an den ersten Streifenabschnitt 12 an. Ein dritter Streifenabschnitt 15 schließt sich in einem dritten Winkel ϕ3 an den zweiten Streifenabschnitt 14 an, wobei der dritte Streifenabschnitt 15 in Einbaulage an dem dem Profil 3 zugewandten Ende eine Haltenase 16 aufweist.

Wie insbesondere aus Figur 1 ersichtlich ist, ist der erste Winkel ϕ1 zwischen dem Verbindungsbereich 6 und dem ersten Streifenabschnitt 12 ein stumpfer Winkel, wobei die Schenkel des Winkels ϕ1 also der Verbindungsbereich 6 und der erste Streifenabschnitt 12 in Einbaulage in Richtung des Profils 3 gerichtet sind. Der Betrag des ersten Winkels ϕ1 kann zwischen 170° bis 175°, bevorzugt 172° liegen. Der bevorzugte Betrag hat sich bezogen auf die Befestigung an dem Profil 3 und dem Modul 2 als besonders vorteilhaft herausgestellt.

Der zweite Winkel ϕ2 kann zwischen 80° bis 100°, bevorzugt 90° liegen. Der bevorzugte Betrag hat sich bezogen auf die Befestigung an dem Profil 3 und dem Modul 2 als besonders vorteilhaft herausgestellt. Somit ist zwischen dem ersten Streifenabschnitt 12 und dem zweiten Streifenabschnitt 14 ein rechter Winkel vorgesehen.

Der dritte Winkel ϕ3 zwischen dem zweiten Streifenabschnitt 14 und den dritten Streifenabschnitt 15 ist ein spitzer Winkel. Der Betrag des dritten Winkels ϕ3 kann zwischen 40° bis 60°, bevorzugt 56° liegen. Der bevorzugte Betrag hat sich bezogen auf die Befestigung an dem Profil 3 und dem Modul 2 als besonders vorteilhaft herausgestellt.

Ferner ist ein vierter Winkel ϕ4 zwischen dem Anlageabschnitt 7 des ersten Befestigungsbereiches 4 und dem Verbindungsabschnitt 6 des zweiten Befestigungsbereiches 5 angedeutet. Der Betrag des vierten Winkels ϕ4 kann zwischen 80° bis 100°, bevorzugt 86° liegen. Der bevorzugte Betrag hat sich bezogen auf die Befestigung an dem Profil 3 und dem Modul 2 als besonders vorteilhaft herausgestellt.

Wie insbesondere aus Figur 8 ersichtlich ist, wird der dritte Streifenabschnitt 15 in Richtung des Anlageabschnittes 7 derart vorgespannt bzw. gebogen, dass anschließend die Anschlagnase 13 des zweiten Streifenabschnittes 14 in Anlage mit der Seitenwand 24 des U-förmigen Profils 3 bringbar ist und dass abschließend der dritte Streifenabschnitt 15 entspannt wird, bis die Haltenase 16 an einer Abwinklung 25 des Profils 3 fixiert ist. Als Werkstoff wird für den Modulhalter vorzugsweise ein elastischer Kunststoff beispielsweise ein Spritzgusswerkstoff verwendet.

In Figur 4 sind mehrere miteinander verbundene Module 2 zum Aufnehmen eines endlos verlegten Rohres zum Kühlen und/oder Heizen dargestellt. Die plattenförmigen Module 2 zum Heizen- und/oder Kühlen weisen Wärmeleitbleche 26 auf, um die Heiz- und/oder Kühlleistung zu erhöhen. Die Wärmeleitbleche 26 können vorzugsweise aus Aluminium bestehen. Es können aber auch Werkstoffe, wie zum Beispiel Kupfer, Stahlblech oder dergleichen verwendet werden. Die Wärmeleitbleche 26 werden auf den Modulen 2 befestigt, z.B. mit Kleber aufgeklebt. Die Wärmeleitbleche 26 werden gleichzeitig auch zum Befestigen des Kühl- und/oder Heizrohres verwendet. Hierzu weisen die Wärmeleitbleche 26 eine Rohrrille bzw. Rohrrinne auf, in die das Kühl- und/oder Heizrohr eingeklipst, also lösbar befestigt wird. Die Rohrrille kann z. B. in das Wärmeleitblech eingeformt bzw. eingeprägt werden.

Die Module 2 weisen mehrere Verriegelungsausnehmungen 8 zum lösbaren und werkzeuglosen Befestigen der jeweiligen Modulhalter 1 auf. Die Verriegelungsausnehmungen 8 sind jeweils an einem Seitenabschnitt jedes Moduls 2 in Reihe vorgesehen. Demzufolge kann jedes Modul 2 über mehrere Modulhalter 1 an den zugeordneten Profilen 3 des Feinrostes der Deckenunterkonstruktion befestigt werden.

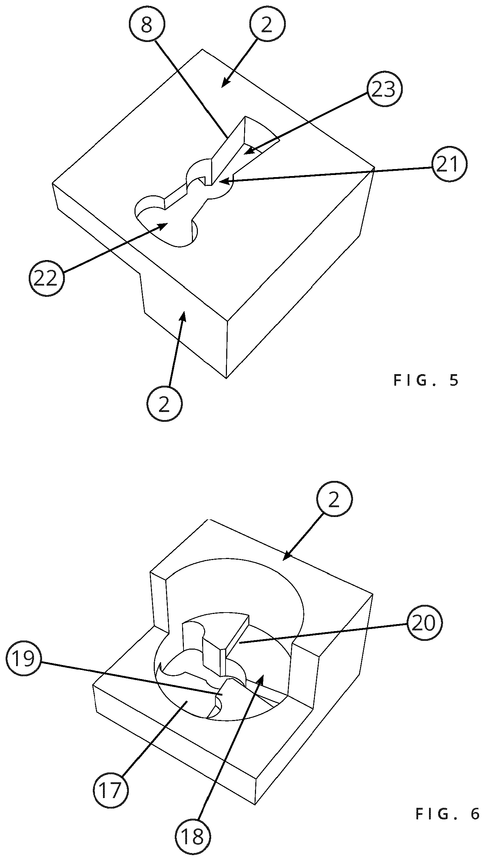

In den Figuren 5 bis 7 sind verschiedene Ansichten der Verriegelungsausnehmung 8 des Moduls 3 detailliert dargestellt. Aus diesen Ansichten ergibt sich, dass die Verriegelungsausnehmung 8 derart ausgeführt ist, dass der T-förmige Fuß 9 des Modulhalters 1 einführbar ist, bis der Anlageabschnitt 7 an der der Deckenunterkonstruktion zugewandten Wand des Moduls 2 zur Anlage kommt. An der der Deckenunterkonstruktion zugewandten Seite ist die Verriegelungsausnehmung 8 mit Führungsabschnitten 17, 18 zum Führen der Drehbewegung des Modulhalters 1 zur Verriegelung versehen. Der quer verlaufende Abschnitt 11 des Fußes 9 wird entlang der kreissegmentförmigen Führungsabschnitte 17, 18 während der Drehbewegung des Fußes 9 geführt. Dadurch, dass die Führungsabschnitte 17, 18 eine Kreissegmentform mit vorbestimmter Steigerung aufweisen und abschließend jeweils einen Endanschlag 19, 20 aufweisen, wird eine sichere Verriegelung des Modulhalters 1 in der Verriegelungsausnehmung 8 des Moduls 2 realisiert.

Zur Zentrierung des Modulhalters 1 weist die Verriegelungsausnehmung 8 einen etwa kreisförmigen Zentrierausschnitt 21 auf, von dem der senkrechte Abschnitt 10 des T-förmigen Fußes 9 aufgenommen wird. Ferner weist die Verriegelungsausnehmung 8 unterschiedlich geformte Endbereiche 22, 23 beidseits des Zentrierausschnittes 21 zur Aufnahme der unterschiedlich gestalteten Enden des quer verlaufenden Abschnittes 11 des Fußes 9 auf.

Figur 8 zeigt einen Ausschnitt einer erfindungsgemäßen Heiz-und/oder Kühldeckenanordnung an einer Trockenbau-Deckenunterkonstruktion mit verschiedenen Trockenbau-Profilen 3, an denen über mehrere erfindungsgemäße Modulhalter 1 mehrere erfindungsgemäße Module 2 lösbar und werkzeuglos befestigt werden. Die Module 2 zum Heizen- und/oder Kühlen werden über die Modulhalter 1 an den zugeordneten Profilen 3 , z. B. Trockenbauprofilen eines Feinrostes der Deckenunterkonstruktion, aufgehängt, sodass die Module 2 die Deckenunterkonstruktion vollständig bedecken, sodass die maximal verfügbare Heiz- bzw. Kühlfläche realisierbar ist. Hierdurch erfolgt eine Vormontage der Module 2 an den Profilen 3. Anschließend können die eine bündige Oberfläche bildenden Module 2 mit einer Sichtbeplankung 27, beispielsweise einer Gipskartonplatte, abgedeckt werden. Dazu wird die Sichtbeplankung 27 über eine Befestigung 28, z.B. eine Verschraubung oder dergleichen, durch die Module 2 hindurch an dem Profil 3 des Feinrostes der Deckenunterkonstruktion befestigt. Hierdurch wird eine den Wärmeübergang verbessernde Anpresskraft erzeugt, sodass eine Pressung der Sichtbeplankung 27 an die Module 2 bzw. an die Wärmeleitbleche 26 der Module 2 erfolgt, wodurch der Wärmeübergang zwischen der Sichtbeplankung 27 und den Modulen 2 erhöht wird.

### Bezugszeichen

- 1: Modulhalter
- 2: plattenförmiges Modul
- 3: Profil bzw. Trockenbau-Profil eines Feinrostes
- 4: erster Befestigungsbereich
- 5: zweiter Befestigungsbereich
- 6: Verbindungsbereich
- 7: Anlageabschnitt
- 8: Verriegelungsausnehmung
- 9: Fuß
- 10: senkrecht verlaufender Abschnitt
- 11: quer verlaufender Abschnitt
- 12: erster Streifenabschnitt
- 13: Anschlagnase
- 14: zweiter Streifenabschnitt
- 15: dritter Streifenabschnitt
- 16: Haltenase
- 17: Führungsabschnitt
- 18: Führungsabschnitt
- 19: Endanschlagsabschnitt
- 20: Endanschlagsabschnitt
- 21: Zentrierausschnitt
- 22: Endbereiche
- 23: Endbereiche
- 24: Seitenwand des U-förmigen Profils
- 25: Abwinklung des U-förmigen Profils
- 26: Wärmeleitblech des Moduls
- 27: Sichtbeplankung bzw.
- 28: Befestigung der Rigipsplatte an dem Trockenbau-Profil eines Feinrostes
- ϕ1: erster Winkel
- ϕ2: zweiter Winkel
- ϕ3: dritter Winkel
- ϕ4: vierter Winkel

## Patentansprüche

1. Halterung zum Befestigen eines Moduls (2) zum Kühlen und/oder Heizen an einer Deckenunterkonstruktion, wobei ein Modulhalter (1) mit einem ersten Befestigungsbereich (4) zum lösbaren werkzeuglosen Befestigen an dem Modul (2) und mit einem zweiten Befestigungsbereich (5) zum lösbaren werkzeuglosen Befestigen an einem Profil (3) der Deckenunterkonstruktion vorgesehen ist, wobei der erste Befestigungsbereich (4) einen Anlageabschnitt (7) zum Abstützen an dem Modul (2) aufweist, **dadurch gekennzeichnet, dass** der Anlageabschnitt (7) in Einbaulage an einer dem Modul (2) zugewandten Seite einen vorstehenden in einer korrespondierenden Verriegelungsausnehmung (8) des Moduls (2) vertauschungssicher befestigbaren Fuß (9) aufweist, wobei der Fuß (9) im Querschnitt etwa eine T-Form aufweist, wobei ein quer verlaufender Abschnitt (11) des T-förmigen Fußes (9) unterschiedlich gestaltete Enden aufweist und wobei ein senkrechter Abschnitt (10) des T-förmigen Fußes (9) einerseits mittig an dem quer verlaufenden Abschnitt (11) und andererseits an dem Anlageabschnitt (7) angeformt ist.

2. Halterung nach Anspruch 1, **dadurch gekennzeichnet, dass** der Modulhalter (1) mit dem ersten Befestigungsbereich (4) und dem zweiten Befestigungsbereich (5) ein einteiliges elastisches Bauteil bildet.

3. Halterung nach Anspruch 1 oder 2, **dadurch gekennzeichnet, dass** der Fuß (9) mit dem quer verlaufenden Abschnitt (11) in die deckungsgleich ausgeführte Verriegelungsausnehmung (8) des Moduls (2) vertauschungssicher einführbar ist, bis der Anlageabschnitt (7) in Anlage mit der Wand des Modules (2) kommt, und dass der eingeführte Fuß (9) durch Drehung in der Verriegelungsausnehmung (8) des Moduls (2) verriegelbar ist.

4. Halterung nach einem der vorangehenden Ansprüche, **dadurch gekennzeichnet, dass** der zweite Befestigungsbereich (5) eine Streifenform mit drei Streifenabschnitten (12, 14, 15) bildet, wobei sich ein erster Streifenabschnitt (12) in einem ersten Winkel (ϕ1) an einen Verbindungsbereich (6) anschließt und in Einbaulage an einer dem Profil (3) zugewandten Seite eine Anschlagnase (13) aufweist, wobei sich ein zweiter Streifenabschnitt (14) in einem zweiten Winkel (ϕ2) an den ersten Streifenabschnitt (12) anschließt und wobei sich ein dritter Streifenabschnitt (15) in einem dritten Winkel (ϕ3) an den zweiten Streifenabschnitt (14) anschließt und in Einbaulage an dem dem Profil (3) zugewandten Ende eine Haltenase (16) aufweist.

5. Halterung nach Anspruch 4, **dadurch gekennzeichnet, dass** der erste Winkel (ϕ1) zwischen dem Verbindungsbereich (6) und dem ersten Streifenabschnitt (12) ein stumpfer Winkel ist, sodass in Einbaulage der erste Streifenabschnitt (12) in Richtung des Profils (3) ausgerichtet ist, dass der zweite Winkel (ϕ2) zwischen dem ersten Streifenabschnitt (12) und dem zweiten Streifenabschnitt (14) etwa einen Betrag zwischen 80° bis 100° aufweist und dass der dritte Winkel (ϕ3) zwischen dem zweiten Streifenabschnitt (14) und dem dritten Streifenabschnitt (15) ein spitzer Winkel ist.

6. Halterung nach Anspruch 4 oder 5, **dadurch gekennzeichnet, dass** der dritte Streifenabschnitt (15) in Richtung des Anlageabschnittes (7) derart vorspannbar ist, dass anschließend die Anschlagnase (13) des zweiten Streifenabschnittes (14) in Anlage mit der Seitenwand (24) des Profils (3) bringbar ist und dass der dritte Streifenabschnitt (15) entspannbar ist, bis die Haltenase (16) an einer Abwinklung (25) des Profils (3) fixiert ist.

7. Plattenförmiges Modul (2) zum Aufnehmen eines endlos verlegten ein Medium führenden Rohres zum Kühlen und/oder Heizen, **dadurch gekennzeichnet, dass** das Modul zumindest eine Verriegelungsausnehmung aufweist, worin ein Modulhalter (1) lösbar und werkzeuglos befestigbar ist, wobei der Modulhalter eine Halterung nach einem der vorangegangenen Ansprüchen aufweist.

8. Modul nach Anspruch 7, **dadurch gekennzeichnet, dass** jede Verriegelungsausnehmung (8) derart ausgeführt ist, dass ein T-förmiger Fuß des Modulhalters (1) einführbar ist, bis ein Anlageabschnitt (7) an der der Deckenunterkonstruktion zugewandten Wand zur Anlage kommt, wobei die der Deckenunterkonstruktion abgewandte Wand Führungsabschnitte (17, 18) zum Führen der Drehbewegung des Modulhalters (1) zum Verriegeln aufweist.

9. Modul nach Anspruch 8, **dadurch gekennzeichnet, dass** die Führungsabschnitte (17, 18) jeweils eine Kreissegmentform mit vorbestimmter Steigung und einen Endanschlagsabschnitt (19, 20) aufweisen.

10. Modul nach einem der Ansprüche 8 oder 9, **dadurch gekennzeichnet, dass** die Verriegelungsausnehmung (8) zur Zentrierung einen angeordneten Zentrierausschnitt (21) zur Aufnahme eines senkrechten Abschnitt (10) des T-förmigen Fußes (9) aufweist und dass die Verriegelungsausnehmung (8) unterschiedlich geformte Endabschnitte beidseits des Zentrierausschnittes (21) zur Aufnahme der unterschiedlich gestalteten Enden eines quer verlaufenden Abschnittes (11) des Fußes (9) aufweist.

11. Modul nach einem der Ansprüche 7 bis 10, **dadurch gekennzeichnet, dass** zumindest ein Wärmeleitblech (26) vorgesehen ist, in dem eine Rohrrille zum Aufnehmen des Medium führenden Rohres vorgesehen ist.

12. Heiz- und/oder Kühldeckenanordnung mit einer Deckenunterkonstruktion mit Trockenbau-Profilen und mit mehreren an den Trockenbau- Profilen über mehrere Halterungen nach einem der Ansprüche 1 bis 6 lösbar und werkzeuglos befestigten Modulen (2) nach einem der Ansprüche 7 bis 11.

13. Heiz- und/oder Kühldeckenanordnung nach Anspruch 12, **dadurch gekennzeichnet, dass** die Deckenunterkonstruktion ein an einer Decke befestigtes Grobrost aus Trockenbau-Profilen und ein an dem Grobrost befestigten Feinrost aus Trockenbau-U-Profilen umfasst, wobei die Module (2) derart an den U-förmigen Profilen (3) des Feinrostes lösbar und werkzeuglos befestigt sind, dass das Feinrost vollständig mit den Modulen (2) abgedeckt ist.

14. Heiz- und/oder Kühldeckenanordnung nach Anspruch 12 oder 13, **dadurch gekennzeichnet, dass** eine Sichtbeplankung (27) an den Modulen (2) anliegt und durch die Module (2) hindurch an den Profilen (3) des Feinrostes zum Aufbringen einer den Wärmeübergang verbessernden Anpresskraft befestigbar ist.

## Claims

1. A holder for fixing a module (2) for cooling and/or heating to a ceiling sub construction, wherein a module holder (1) with a first fixation area (4) for the releasable tool-less fixation to the module (2) and with a second fixation area (5) for the releasable tool-less fixation to a profile (3) of the ceiling sub construction is provided, wherein the first fixation area (4) has an abutment section (7) for the support on the module (2), **characterized in that** the abutment section (7) has, in an installation position, on a side facing the module (2), a protruding foot (9) which can be fixed in an exchange-safe manner in a corresponding latch recess (8) of the module (2), wherein the foot (9) has an approximate T-shape in cross-section, wherein a transversely running section (11) of the T-shaped foot (9) has differently designed ends and wherein a perpendicular section (10) of the T-shaped foot (9) is centrally molded onto the transversely running section (11) on the one side and onto the abutment section (7) on the other side.

2. The holder according to claim 1, **characterized in that** the module holder (1) forms an integral elastic component with the first fixation area (4) and the second fixation area (5).

3. The holder according to claim 1 or 2, **characterized in that** the foot (9) with the transversely running section (11) can be introduced into the identically embodied latch recess (8) of the module (2) in an exchange-safe manner until the abutment section (7) comes into abutment with the wall of the module (2), and that the introduced foot (9) can be latched through rotation in the latch recess (8) of the module (2).

4. The holder according to one of the preceding claims, **characterized in that** the second fixation area (5) forms a strip shape with three strip sections (12, 14, 15), wherein a first strip section (12) adjoins a connection area (6) in a first angle (ϕ1) and has, in an installation position, on a side facing the profile (3), a stop lug (13), wherein a second strip section (14) adjoins the first strip section (12) in a second angle (ϕ2) and wherein a third strip section (15) adjoins the second strip section (14) in a third angle (ϕ3) and has, in an installation position, at the end facing the profile (3), a holding nose (16).

5. The holder according to claim 4, **characterized in that** the first angle (ϕ1) between the connection area (6) and the first strip section (12) is a blunt angle, so that, in an installation position, the first strip section (12) is oriented towards the profile (3), that the second angle (ϕ2) between the first strip section (12) and the second strip section (14) has an amount of about 80° to 100°, and that the third angle (ϕ3) between the second strip section (14) and the third strip section (15) is an acute angle.

6. The holder according to claim 4 or 5, **characterized in that** the third strip section (15) can be pre-tensioned towards the abutment section (7) such that subsequently, the stop lug (13) of the second strip section (14) can be brought into abutment with the side wall (24) of the profile (3) and that the third strip section (15) can be relaxed until the holding nose (16) is fixed to an angling (25) of the profile (3).

7. A plate-shaped module (2) for receiving an endlessly laid, medium-guiding tube for cooling and/or heating, **characterized in that** the module has at least one latch recess in which a module holder (1) can be fixed in a releasable and tool-less manner, wherein the module holder has a holder according to one of the preceding claims.

8. The module according to claim 7, **characterized in that** each latch recess (8) is embodied such that a T-shaped foot of the module holder (1) can be introduced until an abutment section (7) comes into abutment at the wall facing the ceiling sub construction, wherein the wall facing away from the ceiling sub construction has guiding sections (17, 18) for guiding the rotation movement of the module holder (1) for latching.

9. The module according to claim 8, **characterized in that** the guiding sections (17, 18) each have a circular segment shape with a predetermined slope and an end abutment section (19, 20).

10. The module according to one of claims 8 or 9, **characterized in that** the latch recess (8) has an arranged centering section (21) for centering for receiving a perpendicular section (10) of the T-shaped foot (9) and that the latch recess (8) has differently shaped end sections on both sides of the centering section (21) for receiving the differently designed ends of a transversely running section (11) of the foot (9).

11. The module according to one of claims 7 to 10, **characterized in that** at least one heat guiding sheet (26) is provided in which a tube groove for receiving the medium-guiding tube is provided.

12. A heating and/or cooling ceiling arrangement with a ceiling sub construction with dry construction profiles and with several modules (2) according to one of claims 7 to 11 fixed to the dry construction profiles in a releasable and tool-less manner via several holders according to one of claims 1 to 6.

13. The heating and/or cooling ceiling arrangement according to claim 12, **characterized in that** the ceiling sub construction comprises a coarse grate of dry construction profiles fixed to the ceiling and a fine grate of dry construction U-profiles fixed to the coarse grate, wherein the modules (2) are fixed to the U-shaped profiles (3) of the fine grate in a releasable and tool-less manner such that the fine grate is fully covered with the modules (2).

14. The heating and/or cooling ceiling arrangement according to claim 12 or 13, **characterized in that** a sight planking (27) abuts the modules (2) and can be fixed to the profiles (3) of the fine grate through the modules (2) in order to apply a contact pressure which improves the heat transfer.

## Revendications

1. Fixation pour fixer un module (2) pour rafraîchir et/ou chauffer sur une sous-construction de plafond, un support de module (1) étant prévu avec une première zone de fixation (4) pour la fixation détachable sans outil sur le module (2) et avec une deuxième zone de fixation (5) pour une fixation détachable sans outil sur un profil (3) de la sous-construction de plafond, la première zone de fixation (4) présentant une section d'appui (7) pour s'accoter au module (2), **caractérisée en ce que** la section d'appui (7) présente sur un côté tourné vers le module (2) en position de montage un pied (9) saillant pouvant être fixé de manière non interchangeable dans un évidement de verrouillage (8) correspondant du module (2), le pied (9) présentant en section transversale approximativement une forme en T, une section s'étendant perpendiculairement (11) du pied (9) en forme de T présentant des extrémités conçues différemment et une section verticale (10) du pied (9) en forme de T étant formée au centre de la section s'étendant perpendiculairement (11) sur un côté et sur la section d'appui (7) sur l'autre côté.

2. Fixation selon la revendication 1, **caractérisée en ce que** le support de module (1) forme un composant élastique d'une seule pièce avec la première zone de fixation (4) et la deuxième zone de fixation (5).

3. Fixation selon la revendication 1 ou 2, **caractérisée en ce que** le pied (9) avec la section s'étendant perpendiculairement (11) est insérable de manière non interchangeable dans l'évidement de verrouillage (8) réalisé à même le plafond du module (2) jusqu'à ce que la section d'appui (7) soit en appui avec la paroi du module (2), et **en ce que** le pied (9) inséré est verrouillable par rotation dans l'évidement de verrouillage (8) du module (2).

4. Fixation selon l'une quelconque des revendications précédentes, **caractérisée en ce que** la deuxième zone de fixation (5) forme une forme de patte avec trois section de pattes (12, 14, 15), une première section de patte (12) se raccordant à une zone de liaison (6) dans un premier angle (ϕ1) et présentant en position de montage un taquet de butée (13) sur un côté tourné vers le profil (3), une deuxième section de patte (14) se raccordant à la première section de patte (12) dans un deuxième angle (ϕ2) et une troisième section de patte (15) se raccordant à la deuxième section de patte (14) dans un troisième angle (ϕ3) et présentant en position de montage un taquet de retenue (16) sur l'extrémité tournée vers le profil (3).

5. Fixation selon la revendication 4, **caractérisée en ce que** le premier angle (ϕ1) entre la zone de liaison (6) et la première section de patte (12) est un angle obtus, de sorte qu'en position de montage, la première section de patte (12) est orientée vers le profil (3), **en ce que** le deuxième angle (ϕ2) entre la première section de patte (12) et la deuxième section de patte (14) présente approximativement une valeur entre 80° et 100° et **en ce que** le troisième angle (ϕ3) entre la deuxième section de patte (14) et la troisième section de patte (15) est un angle aigu.

6. Fixation selon la revendication 4 ou 5, **caractérisée en ce que** la troisième section de patte (15) peut être précontrainte en direction de la section d'appui (7) de telle sorte qu'ensuite, le taquet de butée (13) de la deuxième section de patte (14) peut être amené en appui avec la paroi latérale (24) du profil (3) et **en ce que** la troisième section de patte (15) peut être détendue jusqu'à ce que le taquet de retenue (16) soit fixé à une partie coudée (25) du profil (3).

7. Module en forme de plaque (2) pour recevoir un tube à pose infinie guidant un milieu pour rafraîchir et/ou chauffer, **caractérisé en ce que** le module présente au moins un évidement de verrouillage dans lequel un support de module (1) peut être fixé de manière détachable et sans outil, le support de module présentant une fixation selon l'une quelconque des revendications précédentes.

8. Module selon la revendication 7, **caractérisé en ce que** chaque évidemment de verrouillage (8) est réalisé de telle sorte qu'un pied en forme de T du support de module (1) soit insérable jusqu'à ce qu'une section d'appui (7) arrive en appui sur la paroi tournée vers la sous-construction de plafond, la paroi tournant le dos à la sous-construction de plafond présentant des sections de guidage (17, 18) pour guider le mouvement de rotation du support de module (1) pour le verrouillage.

9. Module selon la revendication 8, **caractérisé en ce que** les sections de guidage (17, 18) présentent chacune une forme de segment de cercle à pente prédéterminée et une section de butée finale (19, 20).

10. Module selon l'une quelconque des revendications 8 ou 9, **caractérisé en ce que** l'évidement de verrouillage (8) pour le centrage présente une section de centrage (21) disposée pour recevoir une section verticale (10) du pied (9) en forme de T et **en ce que** l'évidement de verrouillage (8) présente des sections d'extrémité formées différemment sur les deux côtés de la section de centrage (21) pour recevoir les extrémités réalisées différemment d'une section s'étendant perpendiculairement (11) du pied (9).

11. Module selon l'une quelconque des revendications 7 à 10, **caractérisé en ce qu'**au moins une tôle thermoconductrice (26) est prévue dans laquelle une rainure de tube est prévue pour recevoir le tube guidant le milieu.

12. Dispositif de chauffage et/ou de rafraîchissement avec une sous-construction de plafond avec profils de construction sèche et avec plusieurs modules (2) selon l'une quelconque des revendications 7 à 11 fixés de manière détachable et sans outil aux profils de construction sèche par plusieurs fixations selon l'une quelconque des revendications 1 à 6.

13. Dispositif de chauffage et/ou de rafraîchissement selon la revendication 12, **caractérisé en ce que** la sous-construction de plafond comprend une grille grossière en profils de construction sèche fixée à un plafond et une grille fine en profils en U de construction sèche fixée à la grille grossière, les modules (2) étant fixés de manière détachable et sans outil aux profils en forme de U (3) de la grille fine de telle sorte que la grille fine soit entièrement recouverte par les modules (2).

14. Dispositif de chauffage et/ou de rafraîchissement selon la revendication 12 ou 13, **caractérisé en ce qu'**un revêtement visible (27) est en contact avec les modules (2) et peut être fixé aux profils (3) de la grille fine en passant par les modules (2) pour appliquer une force de pression améliorant le passage de la chaleur.
